# EUROPÄISCHE PATENTANMELDUNG

(11) **EP 4 501 730 A1**
(43) Veröffentlichungstag der Anmeldung: **05.02.2025**
(21) Anmeldenummer: 23188955.1
(22) Anmeldetag: 01.08.2023
(51) Int. Cl.: B60W 40/00, B60W 60/00, G06N 3/092

(54) **COMPUTERIMPLEMENTIERTES VERFAHREN UND SYSTEM ZUM BEREITSTELLEN EINES ALGORITHMUS DES MASCHINELLEN LERNENS**

(71) Anmelder: dSPACE GmbH, 33102 Paderborn (DE)
(72) Erfinder: Madhusudanan Nair Sheela, Harisankar, 33102 Paderborn (DE); Hemion, Nikolas, 33102 Paderborn (DE)

(57) **Zusammenfassung**

Die Erfindung betrifft ein computer-implementiertes Verfahren zum Bereitstellen eines Algorithmus (A) des maschinellen Lernens zum Erzeugen kritischer Verkehrsszenarien (10) in einem virtuellen Test (12) zum Validieren einer automatisierten Fahrfunktion eines Kraftfahrzeugs, umfassend ein Empfangen (S3) einer durch eine Belohnungsfunktion (18) erzeugten Belohnung (20) und des aktuellen Zustands (22) der Verkehrsflusssimulation (14) in Reaktion (16) auf die ausgeführte Aktion (16) des zumindest einen Verkehrsteilnehmers (15); und ein Bereitstellen (S4) des trainierten Algorithmus (A) des maschinellen Lernens, falls ein, eine Kritikalität des Verkehrsszenarios (10) repräsentierender Parameter (24) des virtuellen Tests (12) in einem vorgegebenen Bereich liegt. Die Erfindung betrifft ein System (1) zum Bereitstellen eines Algorithmus (A) des maschinellen Lernens.

## Beschreibung

Die vorliegende Erfindung betrifft ein computer-implementiertes Verfahren zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs.

Die vorliegende Erfindung betrifft des Weiteren ein System zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs.

### Stand der Technik

Zur Erstellung von Testszenarien für Simulationen ist die Durchführung von Testfahrten erforderlich. Die hierdurch gewonnenen Sensordaten werden sodann in ein logisches Szenario abstrahiert.

Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen.

"Szenario-Optimierung für die Absicherung von automatisierten und autonomen Fahrsystemen" offenbart Verfahren zur Verifikation und Validierung automatisierter und autonomer Fahrsysteme, insbesondere das Finden geeigneter Testszenarien für die virtuelle Absicherung.

Nachteilhaft an diesem Verfahren ist jedoch, dass zur Verifizierung und/oder Validierung der Fahrzeugfunktion ein tatsächlicher Betrieb des Fahrzeugs zum Ermitteln der benötigten Sensordaten erforderlich ist, auf Basis welcher sodann Testszenarien für Simulationen ermittelbar sind.

Demzufolge besteht ein Bedarf, bestehende Verfahren und Testeinrichtungen dahingehend zu verbessern, dass sogenannte kritische Testfälle im Rahmen eines Szenario-basierten Testens für Systeme und Systemkomponenten im hochautomatisierten Fahren in effizienter Weise ermittelt werden können.

Es ist daher Aufgabe der Erfindung, ein Verfahren und System anzugeben, welche in der Lage sind, kritische Testfälle im Rahmen eines Szenario-basierten Testens für Systeme und Systemkomponenten im hochautomatisierten Fahren in effizienter Weise zu ermitteln.

### Offenbarung der Erfindung

Die Aufgabe wird erfindungsgemäß durch ein computer-implementiertes Verfahren zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs mit den Merkmalen des Patentanspruchs 1 gelöst.

Die Aufgabe wird erfindungsgemäß ferner durch ein System zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs mit den Merkmalen des Patentanspruchs 13 gelöst.

Des Weiteren wird die Aufgabe erfindungsgemäß durch ein Computerprogramm mit Programmcode, um zumindest Teile des erfindungsgemäßen Verfahrens auszuführen, wenn das Computerprogramm auf einem Computer ausgeführt wird, mit den Merkmalen des Patentanspruchs 14 gelöst.

Darüber hinaus wird die Aufgabe erfindungsgemäß durch einen computerlesbaren Datenträger mit Programmcode eines Computerprogramms, um zumindest Teile des erfindungsgemäßen Verfahrens auszuführen, wenn das Computerprogramm auf einem Computer ausgeführt wird, mit den Merkmalen des Patentanspruchs 15 gelöst.

Die Erfindung betrifft ein computer-implementiertes Verfahren zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs.

Das Verfahren umfasst ein Bereitstellen einer Verkehrsflusssimulation des virtuellen Tests umfassend eine Mehrzahl von Verkehrsteilnehmern.

Des Weiteren umfasst das Verfahren ein iteratives Steuern zumindest eines der Mehrzahl von Verkehrsteilnehmern zum Ausführen einer Aktion eines Satzes vorgegebener Aktionen durch den Algorithmus des maschinellen Lernens, der einen Zustandsvektor verwendet, welcher einen aktuellen Zustand der Verkehrsflusssimulation darstellt.

Das Verfahren umfasst ferner ein Empfangen einer durch eine Belohnungsfunktion erzeugten Belohnung und des aktuellen Zustands der Verkehrsflusssimulation in Reaktion auf die ausgeführte Aktion des zumindest einen Verkehrsteilnehmers, und ein Bereitstellen des trainierten Algorithmus des maschinellen Lernens, falls ein, eine Kritikalität des Verkehrsszenarios repräsentierender Parameter des virtuellen Tests in einem vorgegebenen Bereich liegt.

Die Erfindung betrifft ferner ein System zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs.

Das System umfasst einen Datenspeicher zum Bereitstellen einer Verkehrsflusssimulation des virtuellen Tests umfassend eine Mehrzahl von Verkehrsteilnehmern.

Des Weiteren umfasst das Verfahren eine Trainingsberechnungseinheit, welche konfiguriert ist, ein iteratives Steuern zumindest eines der Mehrzahl von Verkehrsteilnehmern zum Ausführen einer Aktion eines Satzes vorgegebener Aktionen durch den Algorithmus des maschinellen Lernens, der einen Zustandsvektor verwendet, welcher einen aktuellen Zustand der Verkehrsflusssimulation darstellt, durchzuführen.

Die Trainingsberechnungseinheit ist ferner konfiguriert, eine durch eine Belohnungsfunktion erzeugte Belohnung und den aktuellen Zustand der Verkehrsflusssimulation in Reaktion auf die ausgeführte Aktion des zumindest einen Verkehrsteilnehmers zu empfangen.

Darüber hinaus umfasst das System eine Bereitstellungseinheit, welche konfiguriert ist, den trainierten Algorithmus des maschinellen Lernens, falls ein, eine Kritikalität des Verkehrsszenarios repräsentierender Parameter des virtuellen Tests in einem vorgegebenen Bereich liegt, bereitzustellen.

Die Erfindung betrifft überdies ein Computerprogramm mit Programmcode, Programmcode, um zumindest Teile des erfindungsgemäßen Verfahrens auszuführen, wenn das Computerprogramm auf einem Computer ausgeführt wird.

Die Erfindung betrifft ferner einen computerlesbaren Datenträger mit Programmcode eines Computerprogramms, um zumindest Teile des erfindungsgemäßen Verfahrens auszuführen, wenn das Computerprogramm auf einem Computer ausgeführt wird.

Algorithmen des maschinellen Lernens, auch als Modelle des maschinellen Lernens oder Machine-Learning Modelle bezeichnet, basieren darauf, dass Verfahren der Statistik verwendet werden, um eine Datenverarbeitungsanlage derart zu trainieren, dass diese eine bestimmte Aufgabe ausführen kann, ohne dass sie ursprünglich explizit hierzu programmiert worden ist. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert, im vorliegenden Fall Objekte detektiert werden können.

Bestärkendes Lernen oder verstärkendes Lernen steht für eine Reihe von Methoden des maschinellen Lernens, bei denen ein Software-Agent selbständig eine Strategie erlernt, um erhaltene Belohnungen zu maximieren. Dabei wird dem Agenten nicht vorgezeigt, welche Aktion in welcher Situation die beste ist, sondern er erhält durch die Interaktion mit seiner Umwelt zu bestimmten Zeitpunkten eine Belohnung, die positiv als auch negativ sein kann.

Eine Idee der vorliegenden Erfindung ist es, zumindest einen der Mehrzahl von Verkehrsteilnehmern der Verkehrsflusssimulation durch einen Algorithmus des maschinellen Lernens zu steuern.

Die Steuerung des zumindest einen der Mehrzahl von Verkehrsteilnehmern erfolgt dabei iterativ, wobei der Algorithmus des maschinellen Lernens gemäß einer vorab definierten Belohnungsfunktion eine Aktion eines Satzes vorgegebener Aktionen ausführt, um die Belohnungsfunktion zu maximieren, d.h. um eine kritische Verkehrssituation von Interesse zu erzeugen.

Nach jeder Ausführung einer Aktion erhält der Algorithmus des maschinellen Lernens eine positive oder negative Belohnung, auf welcher Basis eine nachfolgende Aktion bestimmt wird.

Der Algorithmus des maschinellen Lernens wiederholt dabei die Ausführung von Aktionen, bis ein die Kritikalität des Verkehrsszenarios repräsentierender Parameter des virtuellen Tests in einem vorgegebenen Bereich liegt.

Der vorgegebene Bereich ist z.B. dann erreicht, wenn ein vorgegebener Schwellwert über- oder unterschritten wird.

Der erfindungsgemäße Ansatz für maschinelles Lernen ist somit, die Aufgabe als Reinforcement Learning Aufgabe zu formulieren, um einem Agenten beizubringen, wie ein kritisches Manöver in der Simulationsumgebung nach dem Trial-and-Error-Prinzip zu erlernen.

Das übergeordnete Ziel bei der Modellierung von Aktionen und der Belohnungsfunktion ist dabei keine Kollision zwischen Fahrzeugen sowie eine Befolgung von Verkehrsregeln zu erreichen.

Das Nebenziel ist die Erzeugung kritischer Verkehrssituationen, z.B. einem Einschermanöver mit einer Zeitdauer bis zum Aufprall des zumindest einen Verkehrsteilnehmers von kleiner als 1s.

Sobald das Modell das optimale Leistungsniveau erreicht hat, kann das trainierte Modell in der Simulation eingesetzt werden, um das gelernte Manöver zu erzeugen, wann immer die entsprechende Situation eintritt.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass falls der die Kritikalität des Verkehrsszenarios repräsentierende Parameter des virtuellen Tests in dem vorgegebenen Bereich liegt, eine neue Belohnungsfunktion aus gespeicherten Zustands- und Aktionsdaten, insbesondere einer Aktionstrajektorie, erzeugt wird.

Die Belohnungsfunktion wird dabei unter Berücksichtigung der jeweils letzten Aktion des Algorithmus des maschinellen Lernens sowie der aktuellen Zustandsdaten entsprechend angepasst, um die Auswahl einer nächsten Aktion zu ermöglichen, welche in einer Optimierung des Algorithmus resultiert.

Gemäß einer weiteren bevorzugten Weiterbildung der Erfindung ist vorgesehen, dass im Falle einer Kollision zwischen Verkehrsteilnehmern der Algorithmus des maschinellen Lernens eine negative Belohnung erhält, und wobei der Algorithmus des maschinellen Lernens im Falle des Erzeugens eines kritischen Verkehrsszenarios eine positive Belohnung erhält.

So kann der Algorithmus des maschinellen Lernens in vorteilhafter Weise bis zum Erreichen der vorgegebenen Zielsetzung des Erzeugens einer kritischen Verkehrssituation fortwährend optimiert werden.

Gemäß einer weiteren bevorzugten Weiterbildung der Erfindung ist vorgesehen, dass der Satz vorgegebener Aktionen jegliches, innerhalb definierter Verkehrsregeln durchgeführtes, longitudinales und/oder laterales Fahrzeugverhalten, insbesondere ein Durchführen eines Fahrspurwechsels, ein Abbiegen, ein Beschleunigen, ein Abbremsen und/oder ein Ändern eines Abstands zu anderen Verkehrsteilnehmern, umfasst.

Der Algorithmus des maschinellen Lernens führt somit eine spezifische Aktion aus, auf deren Basis eine kritische Verkehrssituation erzeugbar ist.

Gemäß einer weiteren bevorzugten Weiterbildung der Erfindung ist vorgesehen, dass der die Kritikalität des Verkehrsszenarios repräsentierende Parameter durch eine Zeitdauer bis zu einem Aufprall des zumindest einen Verkehrsteilnehmers gegeben ist, wobei ein kritisches Verkehrsszenario eine Zeitdauer bis zum Aufprall des zumindest einen Verkehrsteilnehmers < 1s aufweist.

Durch Definition dieses Parameters kann somit eine objektive Rahmenbedingung zum Maximieren der Zielfunktion des Algorithmus bereitgestellt werden.

Gemäß einer weiteren bevorzugten Weiterbildung der Erfindung ist vorgesehen, dass ein Datensatz von auf Sensordaten zumindest eines Umfelderfassungssensors des zumindest einen Verkehrsteilnehmers basierenden kritischen Verkehrsszenarien, insbesondere kritischer Trajektorien des zumindest einen Verkehrsteilnehmers, bereitgestellt wird.

Das Bereitstellen des Datensatzes von auf Sensordaten des Umfelderfassungssensors basierenden kritischen Verkehrsszenarien ermöglicht in vorteilhafter Weise das Bereitstellen von Ground-Truth-Daten, auf deren Basis der erfindungsgemäße Algorithmus des maschinellen Lernens z.B. mittels eines überwachten Lernverfahrens trainiert werden kann, um auf dieser Grundlage das erfindungsgemäße generative Verfahren, z.B. Reinforcement-Learning Verfahren, zum Erzeugen einer kritischen Verkehrssituation zu erlernen.

Gemäß einer weiteren bevorzugten Weiterbildung der Erfindung ist vorgesehen, dass der Algorithmus des maschinellen Lernens unter Verwendung des Datensatzes von Sensordaten den die Kritikalität des Verkehrsszenarios repräsentierenden Parameter des virtuellen Tests optimiert.

Dieser Ansatz des maschinellen Lernens ist somit in vorteilhafter Weise durch ein Nachahmungslernen in Kombination mit einem generativen Modell gekennzeichnet, um definierte kritische Manöver zu erzeugen.

Gemäß einer weiteren bevorzugten Weiterbildung der Erfindung ist vorgesehen, dass die Verkehrsflusssimulation des virtuellen Tests durch den Algorithmus des maschinellen Lernens gesteuert wird, und wobei der Algorithmus des maschinellen Lernens zum Erzeugen des kritischen Verkehrsszenarios in dem virtuellen Test weiter trainiert wird.

Das zu generierende Manöver kann in vorteilhafter Weise gelernt werden, indem versucht wird, ein Beispielmanöver aus realen Daten zu imitieren. Dieses Beispielmanöver kann in Bezug auf eine Kritikalitätsmetrik kritisch sein oder auch nicht, aber die Kritikalität kann erhöht werden, indem das generative Modell verwendet wird, um die Kritikalitätsmetrik in der Simulationsumgebung durch Versuch und Irrtum zu verbessern. Die Gestaltung der Zustandsdarstellung, der Belohnung und der Aktionen beeinflusst die Modellleistung bei diesem Ansatz ebenfalls.

Gemäß einer weiteren bevorzugten Weiterbildung der Erfindung ist vorgesehen, dass jede einzelne Aktion des Satzes vorgegebener Aktionen von einem unterschiedlichen Algorithmus des maschinellen Lernens ausgeführt wird.

Somit kann in vorteilhafter Weise jeweils ein unterschiedlicher Algorithmus des maschinellen Lernens trainiert werden, eine unterschiedliche Aktion zum Erzeugen einer kritischen Verkehrssituation auszuführen.

Hiermit kann im Gegensatz zu einem Algorithmus, welcher multiple Aktionen ausführt in vorteilhafter Weise eine verbesserte Performanz des Algorithmus bezogen auf die jeweilige Zielfunktion erreicht werden.

Gemäß einer weiteren bevorzugten Weiterbildung der Erfindung ist vorgesehen, dass der Algorithmus des maschinellen Lernens initial unter Verwendung des Datensatzes von Sensordaten mittels eines überwachten Lernverfahrens trainiert wird, ein kritisches Verkehrsszenario zu erzeugen.

Das Bereitstellen der Ground-Truth-Daten ermöglicht dabei in vorteilhafter Weise ein schnelleres Erlernen der jeweiligen Zielfunktion.

Gemäß einer weiteren bevorzugten Weiterbildung der Erfindung ist vorgesehen, dass der Algorithmus des maschinellen Lernens eine Trajektorie des zumindest einen Verkehrsteilnehmers, insbesondere Wegpunkte, repräsentierende Daten, insbesondere in Vektorform, ausgibt.

Die Ausgabedaten ermöglichen somit das Steuern einer automatisierten Fahrfunktion in der Simulation als auch durch ein reales Fahrzeug in einer realen Umgebung.

Gemäß einer weiteren bevorzugten Weiterbildung der Erfindung ist vorgesehen, dass der Algorithmus des maschinellen Lernens den, einen aktuellen Zustand der Verkehrsflusssimulation repräsentierenden, Zustandsvektor empfängt, welcher Informationen betreffend eine Fahrbahngeometrie sowie eine Position und Geschwindigkeit von Objekten in einem Umfeld des zumindest einen Verkehrsteilnehmers umfasst.

Der Algorithmus des maschinellen Lernens ist somit in vorteilhafter Weise in der Lage, basierend auf jeweiligen Umfeldvektordaten ein Fahrverhalten des zumindest einen durch den Algorithmus gesteuerten Fahrzeugs derart zu beeinflussen, um eine kritische Fahrsituation herbeizuführen.

Die hierin beschriebenen Merkmale des computer-implementiertes Verfahrens zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs sind ebenso auf das erfindungsgemäße System zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:

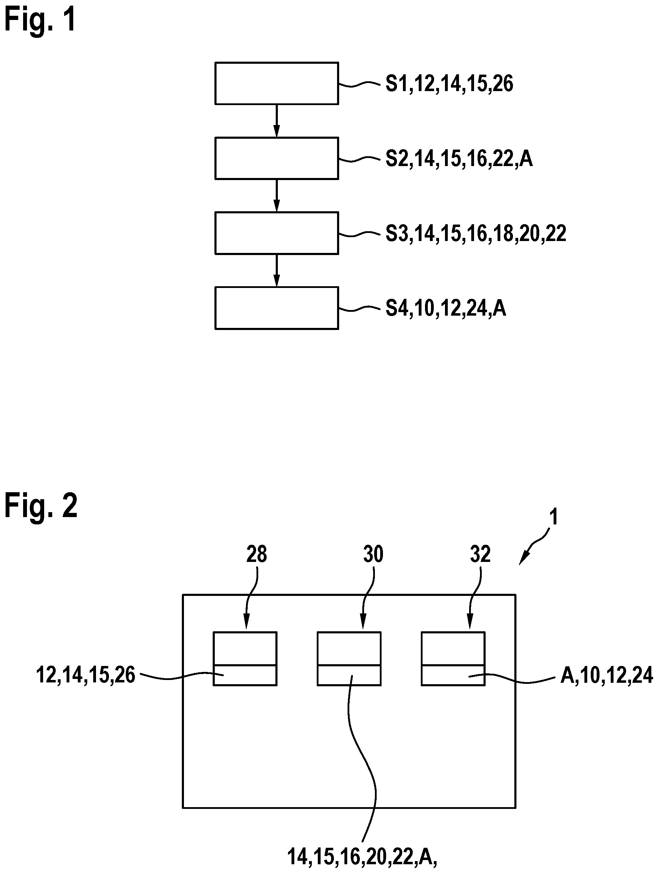

- Fig. 1: ein Ablaufdiagramm eines computerimplementierten Verfahrens zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs gemäß bevorzugten Ausführungsformen der Erfindung; und
- Fig. 2: eine schematische Darstellung eines Systems zum Bereitstellen eines Algorithmus des maschinellen Lernens zum Erzeugen kritischer Verkehrsszenarien in einem virtuellen Test zum Validieren einer automatisierten Fahrfunktion eines Kraftfahrzeugs gemäß bevorzugten Ausführungsformen der Erfindung.

Sofern nicht anders angegeben, bezeichnen gleiche Bezugszeichen gleiche Elemente der Zeichnungen.

### Ausführliche Beschreibung der Ausführungsformen

Fig. 1 zeigt ein computer-implementiertes Verfahren zum Bereitstellen eines Algorithmus A des maschinellen Lernens zum Erzeugen kritischer Verkehrsszenarien 10 in einem virtuellen Test 12 zum Validieren einer automatisierten Fahrfunktion eines Kraftfahrzeugs.

Das Verfahren umfasst ein Bereitstellen S1 einer Verkehrsflusssimulation 14 des virtuellen Tests 12 umfassend eine Mehrzahl von Verkehrsteilnehmern 15.

Des Weiteren umfasst das Verfahren ein iteratives Steuern S2 zumindest eines der Mehrzahl von Verkehrsteilnehmern 15 zum Ausführen einer Aktion 16 eines Satzes vorgegebener Aktionen 16 durch den Algorithmus A des maschinellen Lernens, der einen Zustandsvektor verwendet, welcher einen aktuellen Zustand 22 der Verkehrsflusssimulation 14 darstellt.

Das Verfahren umfasst darüber hinaus ein Empfangen S3 einer durch eine Belohnungsfunktion 18 erzeugten Belohnung 20 und des aktuellen Zustands 22 der Verkehrsflusssimulation 14 in Reaktion 16 auf die ausgeführte Aktion 16 des zumindest einen Verkehrsteilnehmers 15, und ein Bereitstellen S4 des trainierten Algorithmus A des maschinellen Lernens, falls ein, eine Kritikalität des Verkehrsszenarios 10 repräsentierender Parameter 24 des virtuellen Tests 12 in einem vorgegebenen Bereich liegt.

Falls der die Kritikalität des Verkehrsszenarios 10 repräsentierende Parameter 24 des virtuellen Tests 12 in dem vorgegebenen Bereich liegt, wird eine neue Belohnungsfunktion 18 aus gespeicherten Zustands- und Aktionsdaten, insbesondere einer Aktionstrajektorie, erzeugt.

Im Falle einer Kollision zwischen Verkehrsteilnehmern 15 erhält der Algorithmus A des maschinellen Lernens eine negative Belohnung 20. Der Algorithmus A des maschinellen Lernens erhält im Falle des Erzeugens eines kritischen Verkehrsszenarios 10 ferner eine positive Belohnung 20.

Der Satz vorgegebener Aktionen 16 umfasst dabei jegliches, innerhalb definierter Verkehrsregeln durchgeführtes, longitudinales und/oder laterales Fahrzeugverhalten, insbesondere ein Durchführen eines Fahrspurwechsels, ein Abbiegen, ein Beschleunigen, ein Abbremsen und/oder ein Ändern eines Abstands zu anderen Verkehrsteilnehmern 15.

Der die Kritikalität des Verkehrsszenarios 10 repräsentierende Parameter 24 ist durch eine Zeitdauer bis zu einem Aufprall des zumindest einen Verkehrsteilnehmers 15 gegeben. Ein kritisches Verkehrsszenario 10 weist eine Zeitdauer bis zum Aufprall des zumindest einen Verkehrsteilnehmers 15 < 1s auf.

Des Weiteren wird gemäß einer zusätzlichen, optionalen Ausführungsform ein Datensatz 26 von auf Sensordaten zumindest eines Umfelderfassungssensors des zumindest einen Verkehrsteilnehmers 15 basierenden kritischen Verkehrsszenarien 10, insbesondere kritischer Trajektorien des zumindest einen Verkehrsteilnehmers 15, bereitgestellt.

Der Algorithmus A des maschinellen Lernens optimiert unter Verwendung des Datensatzes 26 von Sensordaten den die Kritikalität des Verkehrsszenarios 10 repräsentierenden Parameter 24 des virtuellen Tests 12.

Die Sensordaten können z.B. Kamerabilddaten, Radarbilddaten oder LiDAR-Daten sein.

Die Verkehrsflusssimulation 14 des virtuellen Tests 12 wird durch den Algorithmus A des maschinellen Lernens gesteuert. Der Algorithmus A des maschinellen Lernens wird ferner zum Erzeugen des kritischen Verkehrsszenarios 10 in dem virtuellen Test 12 weiter trainiert.

Jede einzelne Aktion 16 des Satzes vorgegebener Aktionen 16 wird vorzugsweise von einem unterschiedlichen Algorithmus A des maschinellen Lernens ausgeführt.

Der Algorithmus A des maschinellen Lernens wird initial unter Verwendung des Datensatzes 26 von Sensordaten mittels eines überwachten Lernverfahrens trainiert, ein kritisches Verkehrsszenario 10 zu erzeugen.

Der Algorithmus A des maschinellen Lernens gibt ferner eine Trajektorie des zumindest einen Verkehrsteilnehmers 15, insbesondere Wegpunkte, repräsentierende Daten, insbesondere in Vektorform, aus.

Des Weiteren empfängt der Algorithmus A des maschinellen Lernens den, einen aktuellen Zustand 22 der Verkehrsflusssimulation 14 repräsentierenden, Zustandsvektor, welcher Informationen betreffend eine Fahrbahngeometrie sowie eine Position und Geschwindigkeit von Objekten in einem Umfeld des zumindest einen Verkehrsteilnehmers 15 umfasst.

Fig. 2 zeigt eine schematische Darstellung eines Systems zum Bereitstellen eines Algorithmus A des maschinellen Lernens zum Erzeugen kritischer Verkehrsszenarien 10 in einem virtuellen Test 12 zum Validieren einer automatisierten Fahrfunktion eines Kraftfahrzeugs.

Das System umfasst einen Datenspeicher 28 zum Bereitstellen S1 einer Verkehrsflusssimulation 14 des virtuellen Tests 12 umfassend eine Mehrzahl von Verkehrsteilnehmern 15.

Des Weiteren umfasst das System eine Trainingsberechnungseinheit 30, welche konfiguriert ist, ein iteratives Steuern S2 zumindest eines der Mehrzahl von Verkehrsteilnehmern 15 zum Ausführen einer Aktion 16 eines Satzes vorgegebener Aktionen 16 durch den Algorithmus A des maschinellen Lernens, der einen Zustandsvektor verwendet, welcher einen aktuellen Zustand 22 der Verkehrsflusssimulation 14 darstellt, durchzuführen, wobei die Trainingsberechnungseinheit 30 ferner konfiguriert ist, eine durch eine Belohnungsfunktion 18 erzeugte Belohnung 20 und den aktuellen Zustand 22 der Verkehrsflusssimulation 14 in Reaktion 16 auf die ausgeführte Aktion 16 des zumindest einen Verkehrsteilnehmers 15 zu empfangen.

Das System umfasst darüber hinaus eine Bereitstellungseinheit 32, welche konfiguriert ist, den trainierten Algorithmus A des maschinellen Lernens, falls ein, eine Kritikalität des Verkehrsszenarios 10 repräsentierender Parameter 24 des virtuellen Tests 12 in einem vorgegebenen Bereich liegt, bereitzustellen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 10: Verkehrsszenarien
- 12: virtueller Test
- 14: Verkehrsflusssimulation
- 15: Verkehrsteilnehmer
- 16: Aktion
- 18: Belohnungsfunktion
- 20: Belohnung
- 22: aktueller Zustand
- 24: Parameter
- 26: Datensatz von Sensordaten
- 28: Datenspeicher
- 30: Trainingsberechnungseinheit
- 32: Bereitstellungseinheit
- A: Algorithmus des maschinellen Lernens
- S1-S4: Verfahrensschritte

## Patentansprüche

1. Computer-implementiertes Verfahren zum Bereitstellen eines Algorithmus (A) des maschinellen Lernens zum Erzeugen kritischer Verkehrsszenarien (10) in einem virtuellen Test (12) zum Validieren einer automatisierten Fahrfunktion eines Kraftfahrzeugs, mit den Schritten:
Bereitstellen (S1) einer Verkehrsflusssimulation (14) des virtuellen Tests (12) umfassend eine Mehrzahl von Verkehrsteilnehmern (15);
Iteratives Steuern (S2) zumindest eines der Mehrzahl von Verkehrsteilnehmern (15) zum Ausführen einer Aktion (16) eines Satzes vorgegebener Aktionen (16) durch den Algorithmus (A) des maschinellen Lernens, der einen Zustandsvektor verwendet, welcher einen aktuellen Zustand (22) der Verkehrsflusssimulation (14) darstellt;
Empfangen (S3) einer durch eine Belohnungsfunktion (18) erzeugten Belohnung (20) und des aktuellen Zustands (22) der Verkehrsflusssimulation (14) in Reaktion (16) auf die ausgeführte Aktion (16) des zumindest einen Verkehrsteilnehmers (15); und
Bereitstellen (S4) des trainierten Algorithmus (A) des maschinellen Lernens, falls ein, eine Kritikalität des Verkehrsszenarios (10) repräsentierender Parameter (24) des virtuellen Tests (12) in einem vorgegebenen Bereich liegt.

2. Computer-implementiertes Verfahren nach Anspruch 1, wobei falls der die Kritikalität des Verkehrsszenarios (10) repräsentierende Parameter (24) des virtuellen Tests (12) in dem vorgegebenen Bereich liegt, eine neue Belohnungsfunktion (18) aus gespeicherten Zustands- und Aktionsdaten, insbesondere einer Aktionstrajektorie, erzeugt wird.

3. Computer-implementiertes Verfahren nach Anspruch 1 oder 2, wobei im Falle einer Kollision zwischen Verkehrsteilnehmern (15) der Algorithmus (A) des maschinellen Lernens eine negative Belohnung (20) erhält, und wobei der Algorithmus (A) des maschinellen Lernens im Falle des Erzeugens eines kritischen Verkehrsszenarios (10) eine positive Belohnung (20) erhält.

4. Computer-implementiertes Verfahren nach einem der vorhergehenden Ansprüche, wobei der Satz vorgegebener Aktionen (16) jegliches, innerhalb definierter Verkehrsregeln durchgeführtes, longitudinales und/oder laterales Fahrzeugverhalten, insbesondere ein Durchführen eines Fahrspurwechsels, ein Abbiegen, ein Beschleunigen, ein Abbremsen und/oder ein Ändern eines Abstands zu anderen Verkehrsteilnehmern (15), umfasst.

5. Computer-implementiertes Verfahren nach einem der vorhergehenden Ansprüche, wobei der die Kritikalität des Verkehrsszenarios (10) repräsentierende Parameter (24) durch eine Zeitdauer bis zu einem Aufprall des zumindest einen Verkehrsteilnehmers (15) gegeben ist, wobei ein kritisches Verkehrsszenario (10) eine Zeitdauer bis zum Aufprall des zumindest einen Verkehrsteilnehmers (15) < 1s aufweist.

6. Computer-implementiertes Verfahren nach einem der vorhergehenden Ansprüche, wobei ein Datensatz (26) von auf Sensordaten zumindest eines Umfelderfassungssensors des zumindest einen Verkehrsteilnehmers (15) basierenden kritischen Verkehrsszenarien (10), insbesondere kritischer Trajektorien des zumindest einen Verkehrsteilnehmers (15), bereitgestellt wird.

7. Computer-implementiertes Verfahren nach Anspruch 6, wobei der Algorithmus (A) des maschinellen Lernens unter Verwendung des Datensatzes (26) von Sensordaten den die Kritikalität des Verkehrsszenarios (10) repräsentierenden Parameter (24) des virtuellen Tests (12) optimiert.

8. Computer-implementiertes Verfahren nach einem der vorhergehenden Ansprüche, wobei die Verkehrsflusssimulation (14) des virtuellen Tests (12) durch den Algorithmus (A) des maschinellen Lernens gesteuert wird, und wobei der Algorithmus (A) des maschinellen Lernens zum Erzeugen des kritischen Verkehrsszenarios (10) in dem virtuellen Test (12) weiter trainiert wird.

9. Computer-implementiertes Verfahren nach einem der vorhergehenden Ansprüche, wobei jede einzelne Aktion (16) des Satzes vorgegebener Aktionen (16) von einem unterschiedlichen Algorithmus (A) des maschinellen Lernens ausgeführt wird.

10. Computer-implementiertes Verfahren nach einem der vorhergehenden Ansprüche, wobei der Algorithmus (A) des maschinellen Lernens initial unter Verwendung des Datensatzes (26) von Sensordaten mittels eines überwachten Lernverfahrens trainiert wird, ein kritisches Verkehrsszenario (10) zu erzeugen.

11. Computer-implementiertes Verfahren nach einem der vorhergehenden Ansprüche, wobei der Algorithmus (A) des maschinellen Lernens eine Trajektorie des zumindest einen Verkehrsteilnehmers (15), insbesondere Wegpunkte, repräsentierende Daten, insbesondere in Vektorform, ausgibt.

12. Computer-implementiertes Verfahren nach einem der vorhergehenden Ansprüche, wobei der Algorithmus (A) des maschinellen Lernens den, einen aktuellen Zustand (22) der Verkehrsflusssimulation (14) repräsentierenden, Zustandsvektor empfängt, welcher Informationen betreffend eine Fahrbahngeometrie sowie eine Position und Geschwindigkeit von Objekten in einem Umfeld des zumindest einen Verkehrsteilnehmers (15) umfasst.

13. System (1) zum Bereitstellen eines Algorithmus (A) des maschinellen Lernens zum Erzeugen kritischer Verkehrsszenarien (10) in einem virtuellen Test (12) zum Validieren einer automatisierten Fahrfunktion eines Kraftfahrzeugs, umfassend:
einem Datenspeicher (28) zum Bereitstellen (S1) einer Verkehrsflusssimulation (14) des virtuellen Tests (12) umfassend eine Mehrzahl von Verkehrsteilnehmern (15) ;
einer Trainingsberechnungseinheit (30), welche konfiguriert ist, ein iteratives Steuern (S2) zumindest eines der Mehrzahl von Verkehrsteilnehmern (15) zum Ausführen einer Aktion (16) eines Satzes vorgegebener Aktionen (16) durch den Algorithmus (A) des maschinellen Lernens, der einen Zustandsvektor verwendet, welcher einen aktuellen Zustand (22) der Verkehrsflusssimulation (14) darstellt, durchzuführen,
wobei die Trainingsberechnungseinheit (30) ferner konfiguriert ist, eine durch eine Belohnungsfunktion (18) erzeugte Belohnung (20) und den aktuellen Zustand (22) der Verkehrsflusssimulation (14) in Reaktion (16) auf die ausgeführte Aktion (16) des zumindest einen Verkehrsteilnehmers (15) zu empfangen; und
einer Bereitstellungseinheit (32), welche konfiguriert ist, den trainierten Algorithmus (A) des maschinellen Lernens, falls ein, eine Kritikalität des Verkehrsszenarios (10) repräsentierender Parameter (24) des virtuellen Tests (12) in einem vorgegebenen Bereich liegt, bereitzustellen.

14. Computerprogramm mit Programmcode, um zumindest Teile eines Verfahrens nach einem der Ansprüche 1 bis 12 auszuführen, wenn das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 12 auszuführen, wenn das Computerprogramm auf einem Computer ausgeführt wird.
